# EUROPÄISCHE PATENTANMELDUNG

(11) **EP 0 748 845 A1**
(43) Veröffentlichungstag der Anmeldung: **18.12.1996**
(21) Anmeldenummer: 96105834.4
(22) Anmeldetag: 13.04.1996
(51) Int. Cl.: C08L 63/00, C08L 63/02, C08G 18/10, C08G 59/50

(54) **Verfahren zur Herstellung von flexiblen Epoxid-Harz-Systemen**

(30) Priorität: 12.06.1995 DE 19521303
(71) Anmelder: HÜLS AKTIENGESELLSCHAFT, 45764 Marl (DE)
(72) Erfinder: Braunstein, Richard, 46282 Dorsten (DE); Schleimer, Bernhard, 45770 Marl (DE); Schmitt, Felix, Dr., 45701 Herten (DE); Weiss, Jörn Volker, Dr., 45721 Haltern (DE); Wolf, Elmar, Dr., 45661 Recklinghausen (DE)

(57) **Zusammenfassung**

Gegenstand der Erfindung ist ein Verfahren zur Herstellung flexibler Epoxid-Harz-Systeme, wobei die Flexibilität beliebig gesteuert werden kann.

## Beschreibung

Gegenstand der Erfindung ist ein Verfahren zur Herstellung flexibler Epoxid-Harz-Systeme, wobei die Flexibilität beliebig gesteuert werden kann.

Epoxidharze (EP-Harze), insbesondere solche, die aus Diphenylolpropan und Epichlorhydrin hergestellt werden, sind bekannte Rohstoffe zur Herstellung von Gießharzen und Überzügen. Die mit Polyaminen gehärteten Epoxidsysteme sind hart und chemikalienbeständig; es mangelt ihnen jedoch häufig an Elastizität. Wenn EP-Harze rißüberbrückend oder schlagfest sein sollen, temperaturbedingte Spannungen abgebaut werden müssen oder eine gute Haftung zu gealterten EP-Harzanstrichen oder -beschichtungen erzielt werden soll, ist die Mitverwendung eines Flexibilisators wichtig. Voraussetzung für die Wirksamkeit des Flexibilisators ist seine Einbaubarkeit in das amingehärtete EP-Harz. Als solche reaktive Flexibilisatoren haben sich auf dem Markt die in der DE-OS 21 52 606 beschriebenen Verbindungen durchgesetzt. Bei diesen Verbindungen handelt es sich um Polyetherpolyol-Toluylendiisocyanat-Addukte, deren freie NCO-Gruppen durch Nonylphenol blockiert sind. Diese Flexibilisatoren haben jedoch zwei Nachteile: hohe Viskosität und kurze Verarbeitungszeit des damit gehärteten EP-Harz-Systems.

Überraschenderweise konnten diese Nachteile beseitigt werden, indem man, ausgehend von einem Diamin mit einem hohen NH-aktiv-Äquivalentgewicht, einmal durch Abmischung mit einem niedermolekularen Diamin, zum anderen mit einem niedermolekularen Monoamin zwei Härter herstellte, und man je nach Verhältnis dieser beiden Härter zueinander die damit gehärteten EP-Harz-Systeme beliebig flexibilisieren konnte.

Gegenstand der vorliegenden Erfindung ist somit ein Verfahren zur Herstellung von flexiblen EP-Harz-Systemen, dadurch gekennzeichnet, daß als Härterkomponente ein Gemisch aus zwei Härtern eingesetzt wird, wobei
A) der 1. Härter ein NH-aktiv-Äquivalentgewicht von 100 - 300, vorzugsweise 200, besitzt und durch Mischung aus einem Polyether- und Urethangruppen enthaltenden Diamin folgender Zusammensetzung: 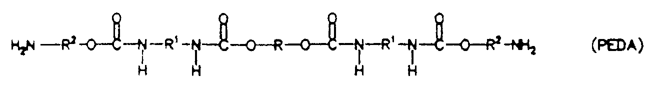 mit R gleich (̵CH₂―CH₂―O)̵ₙ , 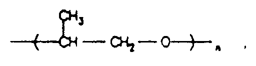 n = 20 - 60 ,
   R¹ gleich mit gegebenenfalls 1 - 4 CH₃-Gruppen substituierter (Cyclo)Alkylenrest mit 4 - 14 C-Atomen oder Einheiten der Formel I oder II 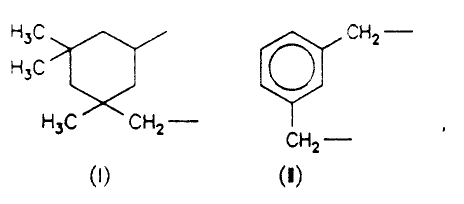
   R² gleich mit gegebenenfalls 1 - 4 CH₃-Gruppen substituierter Alkylenrest mit 6 - 20 C-Atomen, wobei 1 - 3 CH₂-Gruppen durch -O- bzw. -NCH₃-Gruppen ersetzt sein können
      und einem Diamin folgender Zusammensetzung:

      H₂N-R³-NH₂ (DA)
   mit R³ gleich mit gegebenenfalls 1 - 4 CH₃-Gruppen substituierter (Cyclo)Alkylenrest mit 2 - 15 C-Atomen oder Einheiten der Formel I oder II: 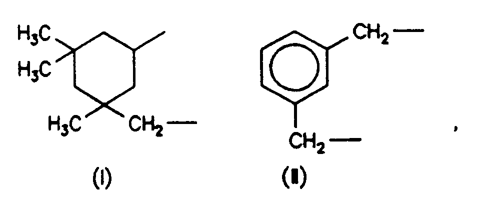 hergestellt wird, und
B) der 2. Härter das gleiche NH-aktiv-Äquivalentgewicht wie der 1. Härter von 100 - 300, vorzugsweise 200, besitzt und durch Mischung des unter A aufgeführten Polyether- und Urethangruppen enthaltenden Diamins "PEDA" und einem Monoamin der Zusammensetzung:

   H₂N-R⁴

   mit R⁴ gleich ein gegebenenfalls alkylsubstituierter Alkylrest mit 6 - 20 C-Atomen, wobei 1 - 3 H₂C-Gruppen durch -O- bzw. -NCH₃-Gruppen ersetzt sein können, hergestellt wird. Beide Härter können je bis zu 4 % eines EP-Katalysators enthalten.

Die Polyether- sowie Urethangruppen enthaltenden Diamine ("PEDA"), die die Hauptkomponente der für das erfindungsgemäße Verfahren einzusetzenden 1. und 2. Härter darstellen, sind nicht Gegenstand der Erfindung. Ihre Herstellung ist problemlos. Sie erfolgt in zwei Stufen, wobei in der 1. Stufe ein Polyetherdiol-Diisocyanat-Addukt (NCO:OH = 2:1), in der Regel ist es ein Polyetherdiol-Isophorondiisocyanat(IPDI)-Addukt, mit einer HO-Gruppe enthaltenden Schiffschen Base im OH:NCO = 1:1-Verhältnis umgesetzt wird. In der 2. Stufe wird die Di-Schiffsche Base in bekannter Weise hydrolysiert. Als Polyetherdiole haben sich solche auf Basis von Polypropylenoxid mit Molgewicht 1000 -3000, vorzugsweise 2000, als geeignet erwiesen. Als Diisocyanate für die Herstellung der Polyether- sowie Urethangruppen enthaltenden Diamine kommen im Prinzip alle (cyclo)aliphatischen Diisocyanate in Frage, bevorzugt wird jedoch Isophorondiisocyanat (IPDI) eingesetzt.

Zur Herstellung der für das erfindungsgemäße Verfahren einzusetzenden 1. Härter (A) wird das Polyether- sowie Urethangruppen aufweisende Diamin in der Regel als 90%ige Lösung in Benzylalkohol mit dem niedermolekularen Diamin:

H₂N-R³-NH₂ (DA),

wobei R³ ein gegebenenfalls mit 1 - 4 CH₃-Gruppen substituierter (Cyclo)Alkylenrest mit 2 - 15 C-Atomen; weitere R³-Strukturen sollen mit Formeln I und II beschrieben werden: 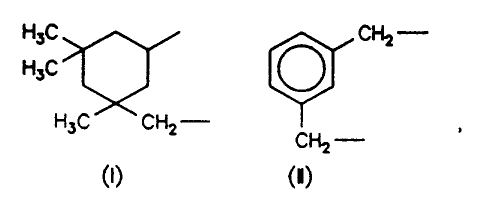 ist, so gemischt, daß das resultierende Gemisch ein NH-aktiv-Äquivalentgewicht von 100 - 300, vorzugsweise 200, und eine Viskosität von 5000 - 20000 mPa·s aufweist. Als Diamin zur Abmischung für den 1. Härter kommen im Prinzip alle technisch verfügbaren Diamine, wie z. B. Ethylendiamin, 2-Methylpentamethylendiamin, 2.2.4-(2.4.4)-Trimethylhexamethylendiamin, Laromin C 252, Laromin C 260, m-Xylylendiamin, 1.2-Diaminocyclohexan sowie Isophorondiamin in Frage. Welches Diamin nun eingesetzt wird, hängt jeweils von der Mindestflexibilität, die man mit dem 1. Härter erreichen möchte, ab. Wie im folgenden noch ausgeführt wird, stellt der 1. Härter (A) die "spröde", der 2. Härter (B) die "flexible" Komponente dar, d. h. daß man Flexibilitätsminimum mit dem 1. Härter erreicht. Durch Abmischung des 1. Härters mit dem 2. Härter sind bei der Härtung mit einem vorgegebenen EP-Harz dann nur noch höhere Flexibilitäten zu erhalten, die ihr Maximum dann erreichen, wenn zur Härtung des EP-Harzes nur der 2. Härter eingesetzt wird.

Zur Herstellung der für das erfindungsgemäße Verfahren einzusetzenden 2. Härter (B) wird das Polyether- sowie Urethangruppen aufweisende Diamin (PEDA) in der Regel als 90%ige Lösung in Benzylalkohol mit dem Monoamin:

H₂N-R^{IV} ,

wobei R^{IV} ein gegebenenfalls alkylsubstituierter Alkylrest mit 6 - 20 C-Atomen, wobei 1 - 3 CH₂-Gruppen durch -O- bzw. -NCH₃-Gruppen ersetzt sein können, so gemischt, daß das resultierende Gemisch ein NH-aktiv-Äquivalentgewicht von 100 - 300, vorzugsweise 200, und eine Viskosität von 200 - 2000 mPa·s aufweist. Als Monoamin zur Abmischung für den 2. Härter kommen z. B. folgende Amine in Frage: Hexylamin, 2-Ethylhexylamin, Decylamin, Dodecylamin, Tridecylamin, Butoxypropyl-amin, Hexoxypropylamin, 3-(2-Ethylhexoxy)-propylamin, Lauryloxypropylamin, Diethylaminopropylamin, 1-Diethylamino-4-aminopentan; besonders geeignet haben sich Hexoxypropylamin, 3-(2-Ethylhexoxy)-propylamin sowie Lauryloxypropylamin.

Die mit dem 2. Härter (B) gehärteten EP-Harze sind hochflexibel. Als Epoxidharze kommen alle bei Raumtemperatur flüssigen Epoxidverbindungen mit mehr als einer Epoxidgruppe in Frage; als besonders vorteilhaft haben sich die Epoxidharze auf Bisphenol A- sowie Bisphenol F-Basis erwiesen.

Bei der Härtung von EP-Harzen nach dem erfindungsgemäßen Verfahren hat es sich als zweckmäßig erwiesen, wenn dem Härtergemisch bis zu 4 Gew.-% für die NH/Epoxid-Reaktion bekannte Katalysatoren, wie sie z. B. in der DE-OS 21 17 099, S. 8, beschrieben sind, zugegeben werden. Als besonders geeignet hat sich der Einsatz von DMP® 30 (Rohm und Haas) erwiesen.

Ein wesentliches Merkmal der vorliegenden Erfindung besteht darin, daß durch beliebige Mischung des 1. und 2. Härters die resultierende Mischung immer das gleiche NH-aktiv-Äquivalent des 1. und 2. Härters besitzt und die damit gehärteten EP-Harze abhängig vom Gewichtsverhältnis der beiden Härter beliebig in ihrer Flexibilität maßgeschneidert werden können. Je höher der Anteil des 2. Härters im Härtergemisch, desto höher ist die Dehnung der damit gehärteten EP-Harze.

Werden EP-Harze mit den in der DE-OS 21 52 606 beschriebenen Verbindungen flexibilisiert, so wird die Dehnung der ausgehärteten EP-Harze durch den Anteil des Flexibilisators "gesteuert". Je höher der Anteil des Flexibilisators im System Flexibilisator/EP-Harz/Diamin, desto größer ist die Dehnung des ausgehärteten EP-Systems. Da es sich bei diesen Flexibilisatoren um hochviskose Produkte handelt, ist dies wiederum mit enormen Verarbeitungsproblemen verbunden, die umso größer sind, je höher die Dehnung des ausgehärteten EP-Systems ist.

Bei dem erfindungsgemäßen Verfahren wird die Flexibilität der ausgehärteten EP-Systeme durch den Anteil des 2. Härters, der niedrig viskos ist, erzielt, d. h. also, daß die Herstellung von hochflexiblen EP-Systemen problemlos ist.

Die nach dem erfindungsgemäßen Verfahren hergestellten Mischungen eignen sich für Überzüge und Gießharze, bei denen es, wie bereits erwähnt, auf hohe Elastizität ankommt, wie z. B. Deck- und Fußbodenbeschichtungen. Ferner können Überzüge nach dem erfindungsgemäßen Verfahren für den Verschleißschutz auf Metallen eingesetzt werden. Flexibilität wie Festigkeit können bei einem vorgegebenen EP-Harz durch den Anteil des 2. Härters (B) beliebig gewählt werden, wobei steigende Mengen am 2. Härter eine Erhöhung der Dehnung (in %) bei gleichbleibender Abnahme der Zugfestigkeit bedeuten.

### Experimenteller Teil

### I. Herstellung der Ausgangsverbindungen

### A) Herstellung der NCO-Präpolymeren

1. 444 Gew.T. IPDI und 2000 Gew.T. eines Polypropylendiols mit Molgewicht von ca. 2000 werden mit 1,2 Gew.T. Dibutylzinndilaurat ca. 20 h bei 50 °C erhitzt. Das Reaktionsprodukt enthält 3,3 % NCO und 2,3 % freies IPDI.
2a. 2100 Gew.T. 2.2.4-(2.4.4)-Trimethylhexamethylendiisocyanat werden mit 2000 Gew.T. des im Beispiel A) 1. eingesetzten Polypropylenglykols 1 h bei 80 °C erhitzt. Das Reaktionsprodukt enthält 18,1 % NCO.
2b. Das nicht umgesetzte TMDI des Reaktionsproduktes aus 2a. wird bei 100 °C/0,1 mbar vom NCO-Präpolymeren abgetrennt. Das Reaktionsprodukt enthält 3,1 % NCO und 0,2 % freies TMDI.

### B) Herstellung der (niedermolekularen) Mono-Schiffschen Base

1. 2 mol 2-(2-Aminoethoxy)-ethanol und 2,8 mol Methylisobutylketon (MIBK) werden bei Raumtemperatur gemischt und langsam bis zum Rückfluß am Wasserabscheider erhitzt und anschließend so lange bei dieser Temperatur weiter erhitzt, bis 36 Gew.T. Wasser und ca. 80 Gew.T. MIBK abdestilliert sind. Danach wird das Reaktionsprodukt im Wasserstrahlvakuum andestilliert (ca. 2 % Destillat). Das so hergestellte Reaktionsprodukt kann ohne weitere Rektifizierung zur Herstellung der Poly-Schiffschen Base (C) eingesetzt werden. Der NH₂-Gehalt des Reaktionsproduktes beträgt 5,5 mmol/g; die Reinheit (nach GC) ist > 98 %.
2. 2 mol 6-Amino-1-hexanol und 2,8 mol MIBK werden entsprechend den im Beispiel B) 1. angegebenen Bedingungen umgesetzt. Das Reaktionsprodukt enthält 5,4 mmol/g basisches N; seine Reinheit (GC) beträgt > 98 %.

### C) Herstellung der (höhermolekularen) Di-Schiffschen Base

1. 1273 Gew.T. des NCO-Präpolymeren A) 1. und 182 Gew.T. der Mono-Schiffschen Base B) 1. wurden intensiv miteinander gemischt und bei 60 °C so lange stehengelassen (ca. 20 h), bis der NCO-Gehalt des Reaktionsgemisches < 0,1 % war.
2. 1355 Gew.T. des NCO-Präpolymeren A) 2b und 182 Gew.T. der Mono-Schiffschen Base B) 1. wurden wie bei C) 1. miteinander umgesetzt und so lange bei 60 °C stehengelassen, bis der NCO-Gehalt des Reaktionsgemisches < 0,1 % war.
3. 1273 Gew.T. des NCO-Präpolymeren A) 1. und 185 Gew.T. der Mono-Schiffschen Base B) 2. wurden analog C) 1. miteinander gemischt und so lange bei 60 °C stehengelassen, bis der NCO-Gehalt des Reaktionsgemisches < 0,1 % war.

### D) Hydrolyse der Di-Schiffschen Base C)

### Allgemeine Herstellungsvorschrift

Zu der auf ca. 50 °C erhitzten Di-Schiffschen Base C) wird unter intensiver Rührung das ca. 70 °C warme H₂O (50 % des Einsatzproduktes) innerhalb von 0,25 h zugegeben. Nach Beendigung der H₂O-Zugabe wird noch ca. 0,5 h bei 60 °C unter intensiver Rührung weiter erhitzt. Anschließend werden das H₂O und MIBK im Wasserstrahlvakuum abdestilliert.
1. Entsprechend der allgemeinen Herstellungsvorschrift wurde die Di-Schiffsche Base C) 1. hydrolysiert:
   - NH₂ [mmol/g]:: 0,55
   - Viskosität (23 °C) mPa·s:: 105 300
2. Bei der Hydrolyse der Di-Schiffschen Base C) 2. wurde ein Diamin mit folgenden Eigenschaften erhalten:
   - NH₂ [mmol/g]:: 0,52
   - Viskosität (23 °C) mPa·s:: 15 960
3. Bei der Hydrolyse der Di-Schiffschen Base C) 3. wurde entsprechend der allgemeinen Herstellungsvorschrift ein Diamin mit folgenden Eigenschaften erhalten:
   - NH₂ [mmol/g]:: 0,5
   - Viskosität (23 °C) mPa·s:: 125 200

### E) Herstellung der nach dem erfindungsgemäßen Verfahren einzusetzenden Härter

1. Das Diamin D) 1. (als 90%ige Lösung in Benzylalkohol) wurde mit IPD so gemischt, daß die Mischung
   a) ein NH-aktiv-Äquivalentgewicht von 250; eine Viskosität (23 °C) von 12 200 mPa·s
   b) ein NH-aktiv-Äquivalentgewicht von 190; eine Viskosität (23 °C) von 7500 mPa·s
   hatte.
2. Das Diamin D) 1. (als 90%ige Lösung in Benzylalkohol) wurde mit 3-(2-Ethylhexoxy)-propylamin so gemischt, daS die Mischung
   a) ein NH-aktiv-Äquivalentgewicht von 250; eine Viskosität (23 °C) von 850 mPa·s
   b) ein NH-aktiv-Äquivalentgewicht von 190; eine Viskosität (23 °C) von 220 mPa·s
   hatte.
3. Das Diamin D) 2. wurde mit IPD so gemischt, daß die Mischung
   a) ein NH-aktiv-Äquivalentgewicht von 250; eine Viskosität (23 °C) von 6700 mPa·s
   b) ein NH-aktiv-Äquivalentgewicht von 190; eine Viskosität (23 °C) von 570 mP·s
   hatte.
4. Das Diamin D) 2. wurde mit 3-(2-Ethylhexoxy)-propylamin so gemischt, daß die Mischung
   a) ein NH-aktiv-Äquivalentgewicht von 250; eine Viskosität (23 °C) von 560 mPa·s
   b) ein NH-aktiv-Äquivalentgewicht von 190; eine Viskosität (23 °C) von 340 mPa·s
   hatte.

### II. Herstellung der flexiblen EP-Beschichtungen nach dem erfindungsgemäßen Verfahren

190 Gew.T. eines EP-Harzes auf Bisphenol A-Basis und Epichlorhydrin wurden mit der äquivalenten Menge des Härter-Gemisches (1. + 2. Härter) und 2 % Tris-dimethylaminomethyl-phenol (DMP 30) intensiv miteinander gemischt und nach ca. 10 min in Platten von 4 mm Dicke gegossen und bei Raumtemperatur 14 Tage stehengelassen. Die ausgehärteten Platten sind transparent und klebfrei.

Es wurden phys. Daten (vgl. Tabelle 1 und 2) nach folgenden Methoden an den Systemen 1, 2 und 3 ermittelt.
a) Shore Härte (DIN 53 505)
b) Zugfestigkeit δ (N/mm²) (DIN 53 455)
c) Dehnung ε (%)
d) Weiterreißfestigkeit WR (N/mm) (DIN 53 515)

1. EPIKOTE 828, das Härtergemisch aus E) 1b und E) 2b, und 2 % DMP 30 wurden, wie in der allgemeinen Herstellungsvorschrift beschrieben, ausgehärtet. Die Zusammensetzung des Harz/Härter-Gemisches sowie die Daten (Shore A, δ, ε, WR) sind in der Tabelle 1 (Beispiele 1.1 bis 1.9) wiedergegeben.
2. EPIKOTE 828, das Härtergemisch aus E) 1a und E) 2a, und 2 % DMP 30 wurden, wie in der allgemeinen Herstellungsvorschrift beschrieben, ausgehärtet. Die Zusammensetzung des Harz/Härter-Gemisches sowie die Daten (Shore A, δ, ε, WR) sind in der Tabelle 2 (Beispiele 2.1 bis 2.6) wiedergegeben.
3. EPIKOTE 828, das Härtergemisch aus E) 3a und E) 4a, und 2 % DMP 30 wurden, wie in der allgemeinen Herstellungsvorschrift beschrieben, ausgehärtet. Die Zusammensetzung des Harz/Härter-Gemisches sowie die Daten (Shore A, δ, ε, WR) sind in der Tabelle 3 (Beispiele 3.1 bis 3.6) wiedergegeben.

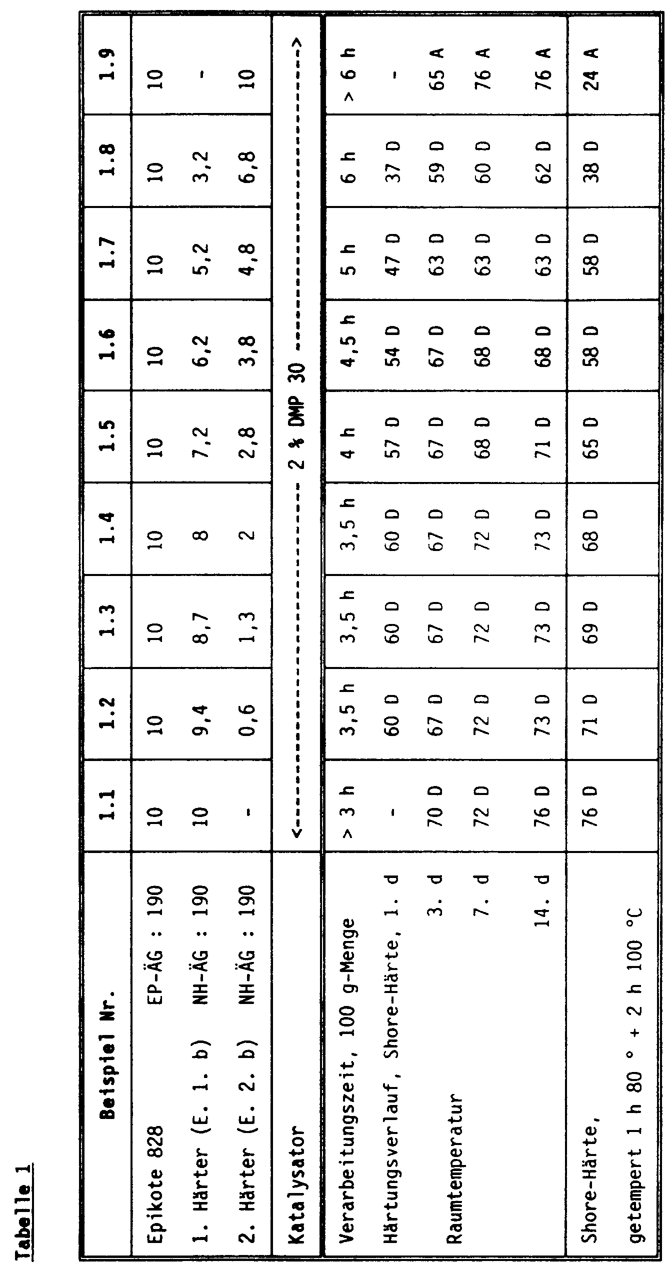

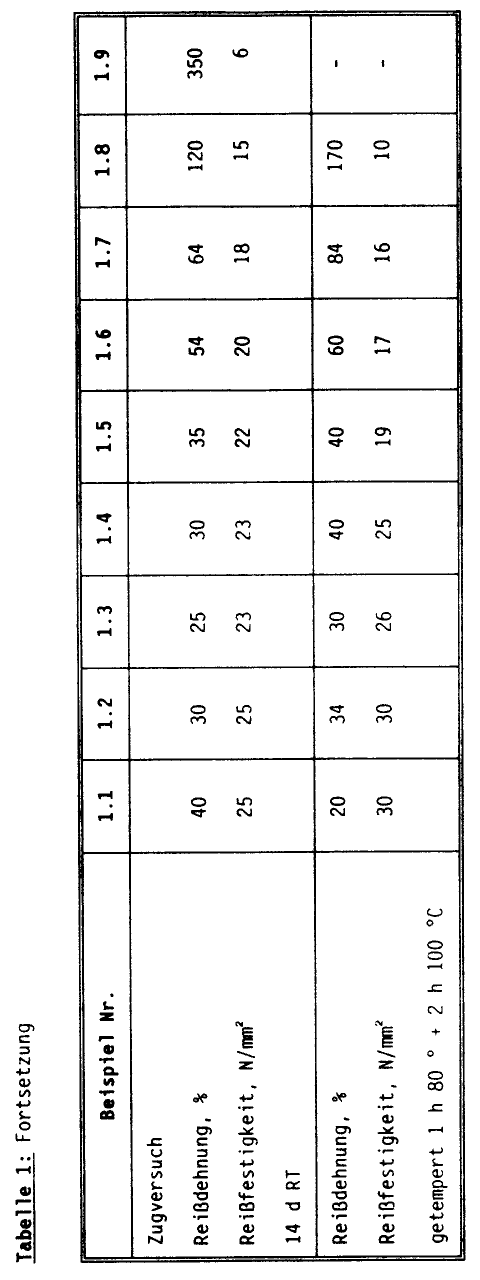

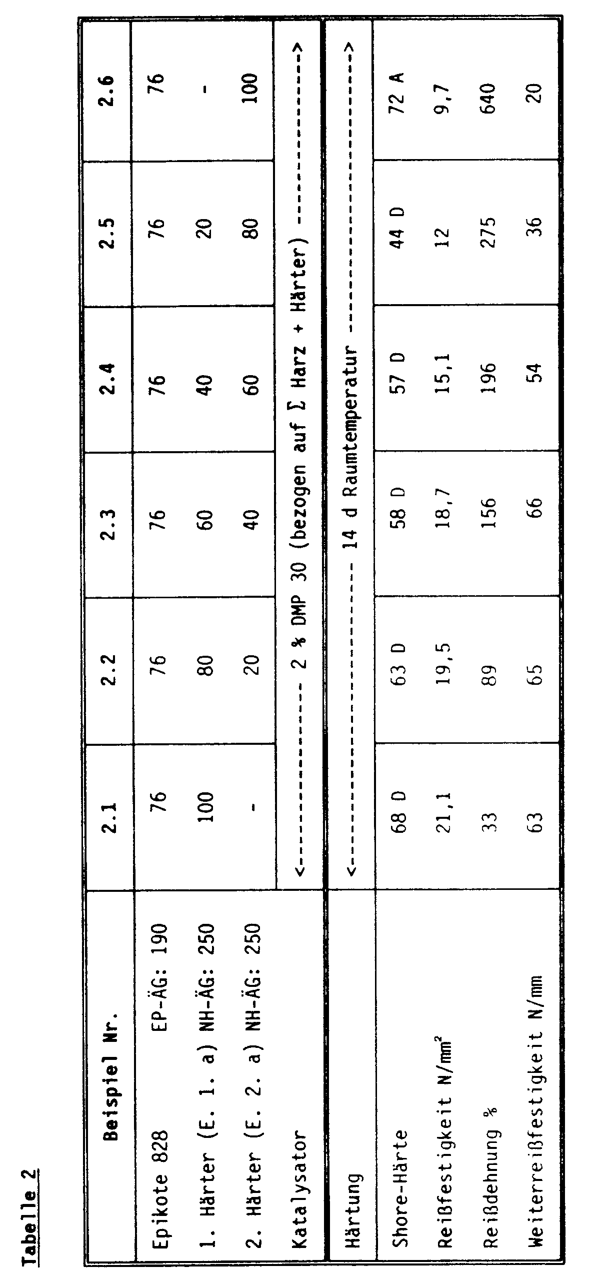

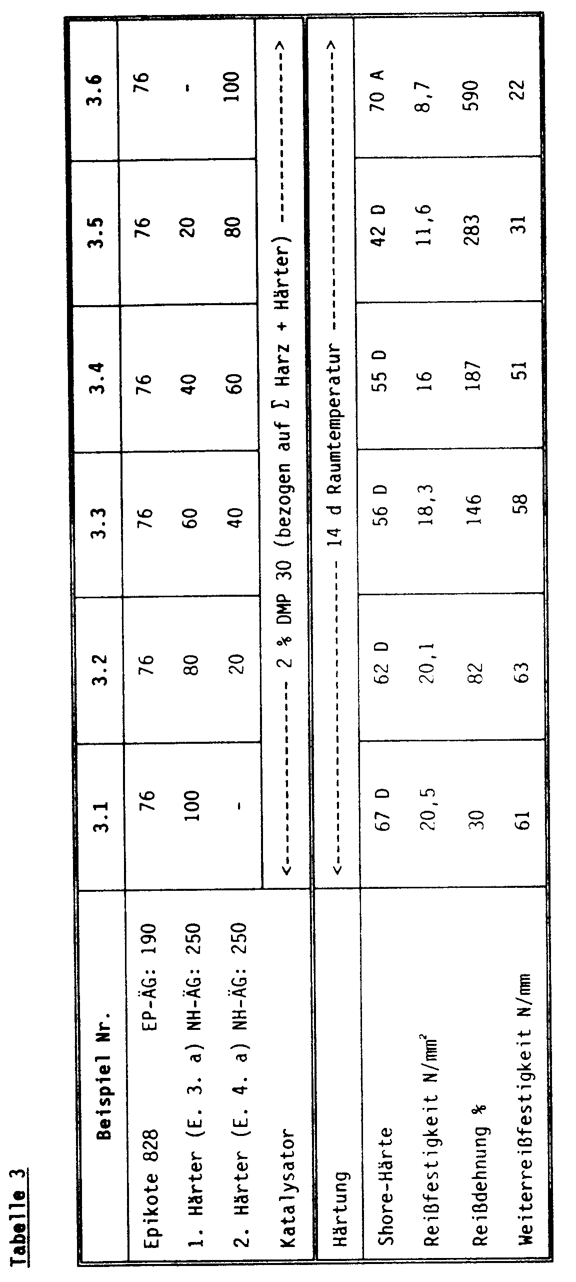

## Patentansprüche

1. Verfahren zur Herstellung von flexiblen Epoxid-Harz-Systemen, dadurch gekennzeichnet, daß als Härterkomponente ein Gemisch aus zwei Härtern eingesetzt wird, wobei
A) der 1. Härter ein NH-aktiv-Äquivalentgewicht von 100 - 300, vorzugsweise 200, besitzt und durch Mischung aus einem Polyether- und Urethangruppen enthaltenden Diamin folgender Zusammensetzung: 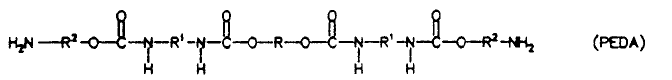 mit R gleich (̵CH₂―CH₂―O)̵ₙ, 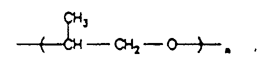 n = 20 - 60 ,
R¹ gleich mit gegebenenfalls 1 - 4 CH₃-Gruppen substituierter (Cyclo)Alkylenrest mit 4 - 14 C-Atomen oder Einheiten der Formel I oder II 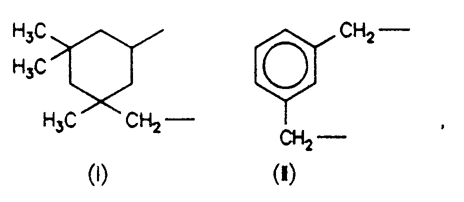
R² gleich mit gegebenenfalls 1 - 4 CH₃-Gruppen substituierter Alkylenrest mit 6 - 20 C-Atomen, wobei 1 - 3 CH₂-Gruppen durch -O- bzw. -NCH₃-Gruppen ersetzt sein können
und einem Diamin folgender Zusammensetzung:
H₂N-R³-NH₂ (DA)
mit R³ gleich mit gegebenenfalls 1 - 4 CH₃-Gruppen substituierter (Cyclo)Alkylenrest mit 2 - 15 C-Atomen oder Einheiten der Formel I oder II 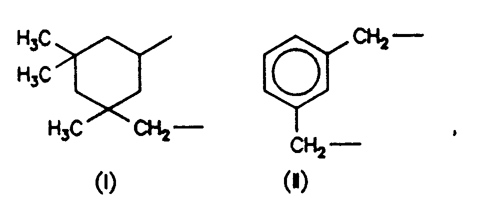 hergestellt wird, und
B) der 2. Harter das gleiche NH-aktiv-Äquivalentgewicht wie der 1. Härter von 100 - 300, vorzugsweise 200, besitzt und durch Mischung des unter A aufgeführten Polyether- und Urethangruppen enthaltenden Diamins "PEDA" und einem Monoamin der Zusammensetzung:
H₂N-R⁴
mit R⁴ gleich ein gegebenenfalls alkylsubstituierter Alkylrest mit 6 - 20 C-Atomen, wobei 1 - 3 H₂C-Gruppen durch -O- bzw. -NCH₃-Gruppen ersetzt sein können, hergestellt wird,
C) und wobei die beiden Harter im Massenverhältnis von 1:99 bis 99:1 zum Einsatz kommen.

2. Verfahren nach Anspruch 1,
dadurch gekennzeichnet,
daß als Härter A Ethylendiamin, 2-Methylpentamethylendiamin, 2.2.4-(2.4.4)-Trimethylhexamethylendiamin, Laromin C 252, Laromin C 260, m-Xylylendiamin, 1.2-Diaminocyclohexan sowie Isophorondiamin eingesetzt werden.

3. Verfahren nach den Ansprüchen 1 oder 2,
dadurch gekennzeichnet,
daß als Härter B Hexylamin, 2-Ethylhexylamin, Decylamin, Dodecylamin, Tridecylamin, Butoxypropyl-amin, Hexoxypropylamin, 3-(2-Ethylhexoxy)-propylamin, Lauryloxypropylamin, Diethylaminopropylamin, 1-Diethylamino-4-aminopentan eingesetzt werden.

4. Verfahren nach Anspruch 3,
dadurch gekennzeichnet,
daß als Härter B Hexoxypropylamin, 3-(2-Ethylhexoxy)-propylamin sowie Lauryloxypropylamin eingesetzt werden.

5. Verfahren nach mindestens einem der Ansprüche 1 bis 4,
dadurch gekennzeichnet,
daß Epoxidharze auf Basis Bisphenol oder Bisphenol F eingesetzt werden.

6. Verfahren nach mindestens einem der Ansprüche 1 bis 5,
dadurch gekennzeichnet,
daß bis zu 4 Gew.-% Katalysatoren, bezogen auf die Gesamtmenge von Epoxidharz und Härtergemisch, eingesetzt werden.
